# NEUE EUROPÄISCHE PATENTSCHRIFT

(11) **EP 1 062 147 B2**
(45) Veröffentlichungstag und Bekanntmachung des Hinweises auf die Entscheidung über den Einspruch: **15.10.2008**
(45) Hinweis auf die Patenterteilung: 25.02.2004
(21) Anmeldenummer: 99913233.5
(22) Anmeldetag: 05.03.1999
(51) Int. Cl.: B62L 3/02, F16D 55/224, F16D 65/12, B62L 1/00

(54) **SCHEIBENBREMSE**
DISK BRAKE
FREIN A DISQUE

(30) Priorität: 13.03.1998 DE 19810685
(43) Veröffentlichungstag der Anmeldung: 27.12.2000
(73) Patentinhaber: GUSTAV MAGENWIRTH GmbH & Co., D-72574 Bad Urach (DE)
(72) Erfinder: KRUMBECK, Markus, D-72574 Bad Urach (DE); RUCKH, Stefan, D-72574 Bad Urach (DE)
(74) Vertreter: Beck, Jürgen
(86) Internationale Anmeldenummer: PCT/EP1999/001444
(87) Internationale Veröffentlichungsnummer: WO 1999/047409

(56) Entgegenhaltungen:
- WO-A-99/10225
- DE-A- 1 152 626
- DE-A- 2 229 481
- DE-A- 4 222 044
- DE-C- 591 787
- FR-A- 2 032 528
- GB-A- 1 207 328
- GB-A- 2 125 126
- JP-A- 4 963 866
- JP-A- 59 086 724
- US-A- 2 608 275
- US-A- 4 596 313
- US-A- 5 193 833
- US-A- 5 632 362
- Shimano Verkaufskatalog Jahr 1978

## Beschreibung

Die Erfindung betrifft eine Scheibenbremse für Fahrzeuge, insbesondere Fahrräder, umfassend eine fest mit einer Nabe verbindbare Bremsscheibe, einen die Bremsscheibe auf einander gegenüberliegenden Seiten übergreifende Bremssattel, mindestens einen ersten, auf der einen Seite der Bremsscheibe angeordneten und beim Betätigen der Bremsscheibe gegenüber dem Bremssattel in Richtung der Bremsscheibe bewegbaren Bremsbelag und mindestens einen zweiten, auf der anderen Seite der Bremsscheibe am Bremssattel in Richtung der Bremsscheibe unverschieblich angeordneten Bremsbelag.

Eine derartige Scheibenbremse ist beispielsweise aus der DE 42 22 044 A1 bekannt. Der Bremssattel ist bei dieser Scheibenbremse in einem Führungszylinder verschieblich gelagert. Die Lage des Bremssattels läßt sich dadurch so einstellen, daß die Bremsbeläge bei unbetätigter Bremse nicht an der Bremsscheibe schleifen, doch ist der Aufbau wegen der genau zu bearbeitenden Führungsflächen kompliziert und dementsprechend teuer und außerdem wegen der konstruktionsbedingten außermittigen Lagerung störanfällig im Hinblick auf Abnutzung und Verschmutzung.

Eine weitere Lösung einer Scheibenbremse ist aus der US 5,632,362 bekannt. Bei dieser ist der Bremssattel in bekannter Weise auf Bolzen verschieblich gelagert. Die Bremsbeläge werden zwar mittels einer Feder auseinandergehalten, die Lage des Bremssattels ist jedoch bei nicht betätigter Bremse nicht definiert, sondern dem Zufall Oberlassen, was zur Folge hat, daß der eine oder andere Bremsbelag an der Scheibe streifen kann. Dies wird von Fahrradfahrem wegen der vergleichsweise geringen menschlichen Leistung und wegen des Schlelfgeräusches nicht akzeptiert.

Darüber hinaus ist aus der DE 591 787 eine Bremse für Kraftfahrzeuge bekannt, bei welcher ein feststehender und ein bewegbarer Bremsring vorgesehen sind, die auf eine Bremsscheibe wirken, welche ihrerseits Bremsbeläge trägt.

Die Bremsflächen sind dabei aufeinander zu bewegbar, wobei die Bremsscheibe auf der Triebwelle ihre axiale Position ändert.

Darüber hinaus ist die Bremsscheibe flexibel ausgebildet, wobei die Flexibilität der Bremsscheibe dazu dient, zunächst die Bremsbeläge teilweise an den Bremsflächen anzulegen und erst bei zunehmender Bewegung der Bremsflächen relativ zueinander eine volle Anlage der Bremsbeläge an den Bremsflächen zu erreichen.

Eine weitere Bremse entsprechend der vorstehend beschriebenen Art der Bremse ist aus der US 2,608,275 bekannt und arbeitet ebenfalls nach dem Prinzip, daß die Bremsscheibe axial verschieblich auf der diese tragenden Welle sitzt. Diese Bremse ist für Getriebe von Kraftfahrzeugen vorgesehen.

Ausgehend von der DE 42 22 044 A1 liegt der Erfindung die Aufgabe zugrunde, eine Scheibenbremse zu schaffen, die einfach im Aufbau und nicht störanfällig ist und bei der im nicht betätigten Zustand die Bremsbeläge die Bremsscheibe nicht berühren.

Diese Aufgabe wird bei einer Scheibenbremse der eingangs beschriebenen Art erfindungsgemäß durch die Merkmale des Anspruchs 1 gelöst.

Der Vorteil der erfindungsgemäßen Lösung ist somit darin zu sehen, daß sowohl die Bremsscheibe als auch der Bremssattel fest mit den sie tragenden Fahrzeugteilen verbunden sind und keine Elemente erforderlich sind, die eine Verschiebung des Bremssattels relativ zur Bremsscheibe oder eine Verschiebung der Bremsscheibe relativ zum feststehenden Bremssattel gestatten.

Insbesondere erlaubt die erfindungsgemäße Lösung einen besonders einfachen Aufbau, bei dem Störungen durch Umwelteinflüsse ausgeschlossen sind.

Außerdem ist die geometrische Zuordnung der Teile, d. h. der Bremsscheibe zu Bremssattel und Bremsbelägen, eindeutig, so daß die Bremsbeläge stets einen Abstand zur Bremsscheibe haben und nicht schleifen.

Die Nutzung der elastischen Verformbarkeit der Bremsscheibe zur Überbrückung des Spaltes zwischen dem zweiten Bremsbelag und der Bremsscheibe ist dabei einer der wesentlichen Gedanken der Erfindung. Die aus der geringen Verformung resultierende Biegebeanspruchung, insbesondere in den Stegen der Bremsscheibe, liegt weit unterhalb des zulässigen Werts, was auch in allen Fahr- und Prüfstandsversuchen bestätigt wurde.

Prinzipiell wäre es bei der erfindungsgemäßen Lösung denkbar, den Bremssattel an beliebigen Teilen des Fahrzeugs anzuordnen, solange dieserfeststehend in einer definierten Ausrichtung gegenüber der Bremsscheibe angeordnet ist. Eine besonders günstige Lösung, insbesondere für Fahrräder, sieht vor, daß der Bremssattel fest mit einem die Nabe tragenden Rahmenteil verbunden ist.

Hinsichtlich der Lagerung der Nabe relativ zum Rahmenteil sind alle Lösungen denkbar, die die Nabe axial unverschieblich relativ zum Rahmenteil positionieren. Hier ist beispielsweise auch eine direkte Abstützung der Nabe relativ zum Rahmenteil denkbar. Eine besonders günstige Lösung sieht vor, daß die Nabe drehbar und axial unverschieblich auf einer rahmenfesten Achse am Rahmenteil gelagert ist. Eine derartige Lösung hat sich insbesondere für Fahrräder als äußerst günstig erwiesen, da auf der rahmenfesten Achse eine einfache, axial unverschiebliche drehbare Lagerung der Nabe möglich ist.

Hinsichtlich der Anordnung der Bremsbeläge sind die unterschiedlichsten Lösungen denkbar. So wäre es beispielsweise denkbar, die Bremsbeläge direkt auf diese tragenden Elementen anzuordnen. Eine besonders günstige Lösung sieht vor, daß die Scheibenbremse einen ersten und einen zweiten Bremsklotz aufweist, welche die ersten bzw. zweiten Bremsbeläge tragen. Diese Lösung hat den Vorteil, daß ein derartiger Bremsklotz auswechselbar ist und somit auch bei Verschleiß der Bremsbeläge in einfacher Weise ein Ersetzen derselben möglich ist.

Hinsichtlich der Fixierung der Bremsbeläge zu den diese tragenden Teilen der Scheibenbremse sind die unterschiedlichsten Lösungen denkbar. Beispielsweise ist eine feste mechanische Fixierung vorteilhaft. Eine besonders günstige Lösung, insbesondere hinsichtlich der Auswechselbarkeit der Bremsklötze, sieht vor, daß die Bremsklötze mittels Dauermagneten an den diese abstützenden Teilen in Anlage gehalten sind und somit auch insbesondere beim Bewegen der Bremsklötze in ihre nicht betätigte Stellung sichergestellt ist, daß die Bremsklötze mit dem gewünschten Spalt relativ zur Bremsscheibe positioniert sind und in dieser Position verbleiben.

Besonders günstig ist es, insbesondere wenn die Dauermagneten die Bremsklötze in ihren Positionen halten sollen, wenn die Bremsklötze Stahlplatten als Trägerplatten aufweisen, welche aufgrund ihrer Magnetisierbarkeit eine hohe Wechselwirkungskraft mit den Dauermagneten gewährleisten.

Eine besonders günstige Lösung beim Einsatz von Dauermagneten sieht vor, daß mindestens einer der Dauermagnete exzentrisch zu dem diesen tragenden Teil angeordnet ist. In diesem Fall ist eine asymmetrische, d. h. exzentrische, Kraftwirkung zwischen dem Dauermagnet und dem Bremsklotz gewährleistet, welche sich beispielsweise dazu ausnutzen läßt, eine Relativdrehung zwischen dem Bremsklotz und dem den Dauermagnet tragenden Teil zu hemmen.

Da die Bremsklötze thermischen Belastungen unterliegen, insbesondere beim langen Bremsen, und sich somit die Erhitzung der Bremsklötze auch auf die weiteren Teile der Scheibenbremse auswirken könnte, ist vorzugsweise vorgesehen, daß die die Bremsklötze abstützenden Teile der Scheibenbremse gegenüber den Bremsklötzen thermisch isoliert sind, d. h., daß die Wärmeübertragungvon den Bremsklötzen auf diese die Bremsklötze abstützenden Teile verringert wird und somit eine Erwärmung dieser Teile zumindest reduziert werden kann.

Hinsichtlich des Einbaus der Bremsklötze hat es sich als besonders vorteilhaft erwiesen, wenn die beiden Bremsklötze durch eine seitlich neben der Bremsscheibe angeordnete Öffnung des Bremssattels hindurch montierbar sind, so daß eine einfache Auswechslung der Bremsklötze bei abgenutzten Bremsbelägen möglich ist, ohne weitgehende Demontage des Bremssattels.

Eine besonders günstige Lösung sieht vor, daß die Öffnung in axialer Richtung des Kolbens, vorzugsweise koaxial zu diesem angeordnet ist.

Hinsichtlich der Art, wie die Bewegbarkeit des ersten Bremsbelags relativ zur Bremsscheibe in Richtung auf den zweiten Bremsbelag realisiert sein soll, werden im Zusammenhang mit den bisherigen Ausführungsformen keine näheren Angaben gemacht. So wäre es beispielsweise denkbar, den ersten Bremsbelag durch einen Exzenter oder eine Kurvenscheibe in Richtung des zweiten Bremsbelags zu bewegen.

Eine besonders günstige Lösung sieht jedoch vor, daß der erste Bremsbelag durch einen im Bremssattel angeordneten hydraulisch betätigbaren Kolben in Richtung der Bremsscheibe bewegbar ist.

Beim Vorsehen eines derartigen hydraulisch bewegbaren Kolbens ist dafür Sorge zu tragen, daß dieser Kolben bei nicht betätigter Scheibenbremse eine Stellung einnimmt, in welcher ein Schleifen des von diesem Kolben beaufschlagbaren Bremsbelags an der Bremsscheibe verhindert wird.

Beispielsweise wäre es denkbar, hierzu unmittelbar auf den Bremsbelag einzuwirken. Eine besonders einfach realisierbare Lösung sieht jedoch vor, daß der Kolben mittels einer Feder in Richtung einer unbetätigten Stellung beaufschlagt ist und somit bei nicht betätigter Scheibenbremse in der unbetätigten Stellung steht, weiche erfindungsgemäß so definiert ist, daß der von dem Kolben beaufschlagbare Bremsbelag nicht an der Bremsscheibe schleift, sondern zwischen diesem und der Bremsscheibe der gewünschte Spalt besteht.

Um insbesondere beim Vorsehen eines hydraulisch betätigbaren Kolbens eine thermische Belastung des Kolbens und somit der Abdichtung des Kolbens in dem Gehäuse und auch des Hydraulikmediums zu vermeiden, ist vorzugsweise vorgesehen, daß der Kolben über ein thermisch isolierendes Element auf den ersten Bremsbelag wirkt.

Diese Lösung läßt sich besonders einfach konstruktiv dadurch realisieren, daß zwischen dem Kolben und einem den ersten Bremsbelag umfassenden ersten Bremsklotz ein Ring aus wärmeisolierendem Material angeordnet ist.

Um insbesondere dann, wenn der Kolben mittels einer Feder in Richtungseiner unbetätigten Stellung beaufschlagt ist, sicherzustellen, daß der erste Bremsbelag der Bewegung des Kolbens mit Sicherheit folgt, ist vorgesehen, daß der Bremsklotz mittels eines Dauermagneten in Richtung einer Anlage an dem diesen Abstützenden Kolben beaufschlagt ist.

Hinsichtlich der Anordnung des zweiten Bremsbelags am Bremssattel wurden bislang keine näheren Angaben gemacht. So sieht ein vorteilhaftes Ausführungsbeispiel vor, daß der zweite Bremsbelag von einem fest in den Bremssattel einsetzbaren Teil gehalten ist.

Vorzugsweise ist dabei das Teil so ausgebildet, daß es in eine sich an die Öffnung zum Einsetzen der Bremsbeläge anschließende Ausnehmung im Bremssattel einsetzbar ist. Diese Lösung vereint in besonders einfacher Weise die vorteilhafte Montage beider Bremsbacken durch eine Öffnung mit einer konstruktiv einfachen Lösung der Positionierung des den zweiten Bremsbelag tragenden Bremsbackens.

Konstruktiv besonders einfach läßt sich dies dann realisieren, wenn das Teil als in die Ausnehmung einschraubbare Gewindescheibe ausgebildet ist.

Um einerseits die Gewindescheibe thermisch gegenüber dem zweiten Bremsbelag zu isolieren, ist vorzugsweise vorgesehen, daß die Gewindescheibe einen äußeren Rand aufweist, an welchem der zweite Bremsklotz anliegt und welcher den zweiten Bremsklotz in einem Luftspalt relativ zu dem den Bremsklotz haltenden Dauermagneten positioniert, so daß insbesondere auch der Dauermagnet keiner Wärmebelastung unterworfen ist.

Da es im Rahmen der erfindungsgemäßen Lösung von großer Bedeutung ist, in der unbetätigten Stellung der Scheibenbremse einen Spalt zwischen den Bremsbelägen und der Bremsscheibe aufrechtzuerhalten, ist vorzugsweise vorgesehen, daß der erste Bremsbelag mittels einer Einstelleinrichtung in einer definierten geometrischen Zuordnung zur Bremsscheibe positionierbar ist. Eine derartige Einstelleinrichtung, insbesondere vorgesehen am Bremssattel, erlaubt es, selbst bei grober Vorpositionierung des Bremssattels einen Spalt in gewünschter Weise exakt einzustellen.

Besonders einfach läßt sich dies konstruktiv dann realisieren, wenn die Einstelleinrichtung eine als Anschlag für den Kolben dienende und relativ zum Gehäuse verstellbare Einstellschraube umfaßt.

Eine derartige Einstellschraube kann zusätzlich noch in erfindungsgemäßer Weise vorteilhaft dahingehend ausgenutzt werden, daß mit dieser auch ein Druckraum zwischen dem Gehäuse und dem Kolben mit Hydraulikmedium befüllbar und/oder belüftbar ist. Hierzu ist vorgesehen, daß die Einstellschraube mit einer verschließbaren Entlüftungsbohrung versehen ist.

Zusätzlich zur exakten Positionierung des ersten Bremsbelags mittels einer Einstelleinrichtung ist vorzugsweise auch vorgesehen, daß der zweite Bremsbelag mittels einer Einstelleinrichtung in einer definierten geometrischen Zuordnung relativ zur Bremsscheibe positionierbar ist, so daß auch bei Grobpositionierung des Bremssattels relativ zur Bremsscheibe die exakte Positionierung des Bremsbelags relativ zur Bremsscheibe möglich ist.

Insgesamt ist die Positionierung der Bremsbeläge mittels einer Einstelleinrichtung schon bereits deshalb von Vorteil, da sich die Bremsbeläge abnützen und somit in einfacher Weise ein Nachstellen der Bremsbeläge je nach Grad ihrer Abnützung die Einsatzfähigkeit der erfindungsgemäßen Scheibenbremse mit der gewünschten Präzision hinsichtlich des Ansprechens der Bremse realisieren läßt.

Besonders vorteilhaft läßt sich eine derartige Einstellung für den zweiten Bremsbelag dadurch realisieren, daß die Einstelleinrichtung ein relativ zum Gehäuse verstellbares Gewindeelement umfaßt.

Ein weiteres vorteilhaftes Ausführungsbeispiel einer erfindungsgemäßen Scheibenbremse sieht vor, daß zwischen der Bremsscheibe und dem Gehäuse des Bremssattels bestehende Zwischenräume kleiner sind als die Dicke der Trägerplatten der Bremsklötze, so daß damit sichergestellt ist, daß die Trägerplatten stets sicher in dem Gehäuse gehalten werden, unabhängig von der Abnutzung der von diesen getragenen Bremsbeläge.

Weitere Merkmale und Vorteile der Erfindung sind Gegenstand der nachfolgenden Beschreibung sowie der zeichnerischen Darstellung eines Ausführungsbeispiels. In der Zeichnung zeigen:
- Fig. 1: eine Seitenansicht einer erfindungsgemäßen Scheibenbremse, montiert an einer Gabel eines Fahrrads;
- Fig. 2: eine Ansicht in Richtung des Pfeils X in Fig. 1 und

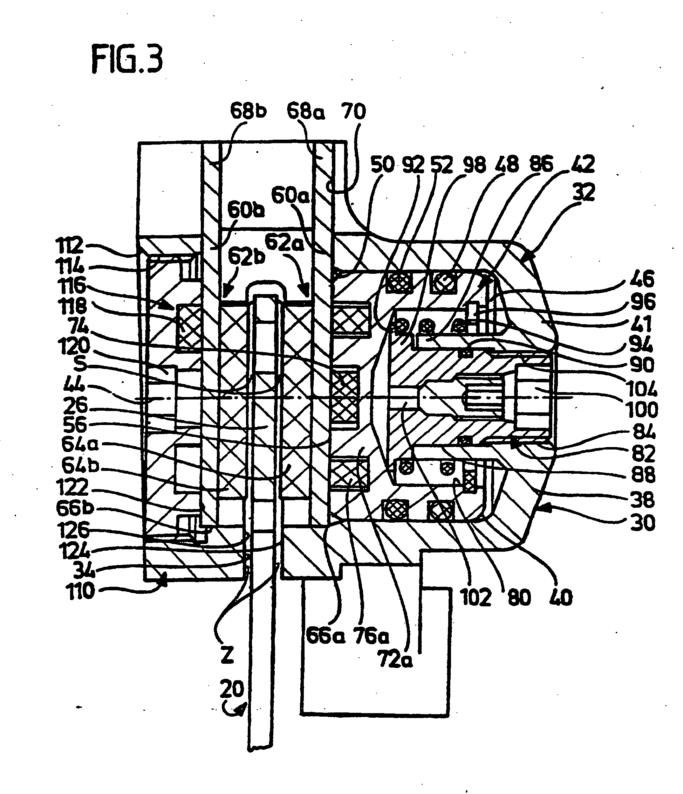

- Fig. 3: einen Schnitt längs Linie I-I in Fig. 1.

Eine ein Rahmenteil 10 eines Fahrzeugs darstellende Federgabel eines Fahrrades trägt eine rahmenfest angeordnete Achse 12, auf welcher eine Nabe 14 eines Laufrades 16 um eine Drehachse 18 drehbar, jedoch axial unverschieblich bezüglich des Rahmenteils 10 gelagert ist.

Mit dieser Nabe 14 ist eine als Ganzes mit 20 bezeichnete Bremsscheibe fest verbunden, so daß auch die Bremsscheibe 20 in einer definierten geometrischen Ausrichtung zum Rahmenteil 10 um die Drehachse 18 mit der Nabe 14 drehbar ist.

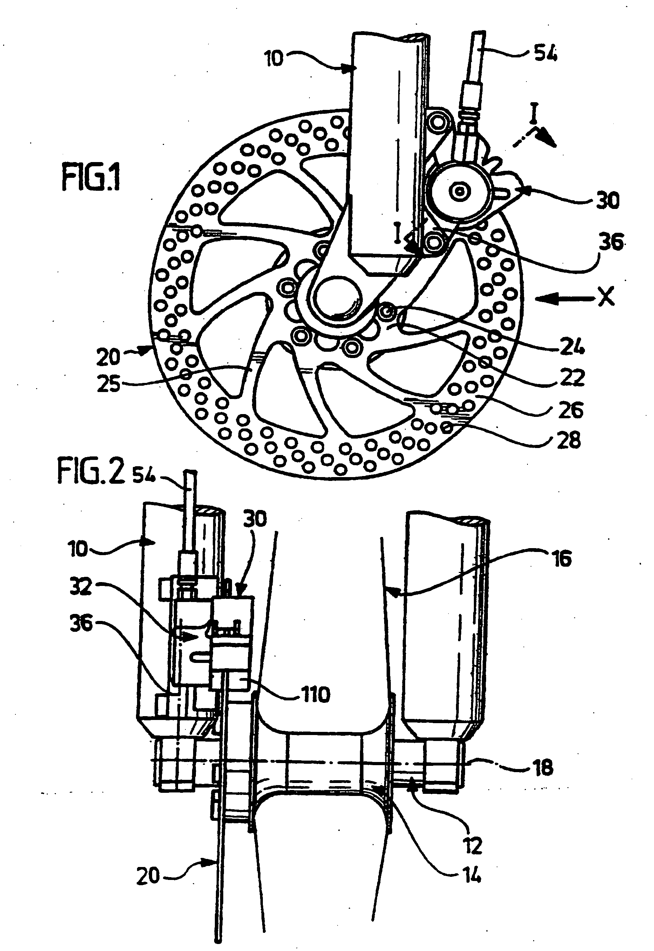

Die Bremsscheibe 20 umfaßt, wie in Fig. 1 dargestellt, einen inneren Ring 22, der beispielsweise mittels Schrauben 24 an der Nabe 14 angeschraubt ist, sowie einen über Stege 25 mit dem inneren Ring 24 verbundenen äußeren Ring 26, der im einfachsten Fall massiv ausgebildet ist. Der äußere Ring 26 ist jedoch vorzugsweise, wie in Fig. 1 dargestellt, mit Bohrungen 28 oder anders geformten Durchbrüchen versehen, die in erster Linie zur Reduzierung des Gewichts des äußeren Rings 26 dienen.

Mit dem Rahmenteil 10 ist ein als Ganzes mit 30 bezeichneter Bremssattel fest verbunden. Dieser Bremssattel 30 umfaßt ein die Bremsscheibe 20 umgreifendes Gehäuse 32 mit einer zur Achse 12 oder Drehachse 18 hin offenen schlitzförmigen Ausnehmung 34, durch welche der äußere Ring 26 der Bremsscheibe 20 hindurchbewegbar ist, wenn sich die Bremsscheibe 20 um die Drehachse 18 dreht.

Das Gehäuse 32 ist dabei vorzugsweise so ausgestaltet, daß es an am Rahmenteil 10 vorhandene Flansche 36 anschraubbar und somit fest mit dem Rahmenteil 10 verbindbar ist.

Das Gehäuse 32 weist in seinem dem Laufrad 16 abgewandten Gehäuseteil 38 eine zur Bremsscheibe 20 hin offene zylindrische Bohrung 40 auf, welche durch eine Rückwand 41 des Gehäuses verschlossen ist. In der zylindrischen Bohrung 40 ist ein als Ganzes mit 42 bezeichneter Kolben vorgesehen und in der zylindrischen Bohrung 40 längs einer Achse 44 derselben von der Rückwand 41 weg oder auf diese zu verschieblich gelagert.

Ein freier Raum zwischen dem Kolben 42 und dem die zylindrische Bohrung 40 tragenden Gehäuseteil 38 bildet einen Druckraum 46, welcher mittels einer Dichtung 48 zu einer offenen Seite 50 der zylindrischen Bohrung 40 hin und somit nach außen abgedichtet ist. Zur Verhinderung von Schmutzzutritt ist außerdem auf einer dem Druckraum 46 abgewandten Seite der Dichtung 48 eine Abstreifer 52 vorgesehen.

Zum Bewegen des Kolbens 42 ist der Druckraum 46, wie in Fig. 1 und 2 dargestellt, über eine Leitung 54 mit einem zeichnerisch nicht dargestellten Druckerzeuger, z. B. einem handbetätigbaren Hauptbremszylinder, verbunden, wobei der Hauptbremszylinder hydraulisch auf den Druckraum 46 wirkt.

Der Kolben 42 weist eine äußere Kolbenstirnfläche 56 auf und liegt mit dieser an einer Trägerplatte 60a eines ersten Bremsklotzes 62a an. Der erste Bremsklotz 62a umfaßt ferner neben der Trägerplatte 60a noch einen fest mit der Trägerplatte 60a verbundenen Bremsbelag 64a.

Ferner ist die Trägerplatte 60a mit einer im wesentlichen runden Außenkontur 66a versehen und wird vorzugsweise mit dieser Außenkontur 66a von dem Gehäuse 32 in Richtung quer zur Achse 44 der Bohrung 40 geführt, wodurch die beim Bremsen entstehenden und auf den Bremsklotz 62a wirkenden Kräfte aufgenommen werden.

Zusätzlich ist die Außenkontur 66a derTrägerplatte 60a an einer Stelle ihres Umfangs mit einem radialen Fortsatz 68a versehen, der sich durch eine entsprechende Öffnung 70 des Gehäuses 32 hindurch nach außen erstreckt, so daß der Bremsklotz 62a sich in dem Gehäuse 32 nicht verdrehen kann. Die Verdrehsicherung des Bremsklotzes 62a kann aber auch durch andere geometrische Formen, die ein Drehen desselben verhindern, realisiert werden.

Die Trägerplatte 60a ist vorzugsweise aus Stahl hergestellt. Ein In einem Kolbenboden 72a nahe der Kolbenstirnfläche 66a befestigt angeordneter Dauermagnet 74 zieht die Trägerplatte 60a und damit auch den Bremsklotz 62a an und gibt damit sowohl derTrägerplatte 60a als auch dem Bremsklotz 62a eine definierte Lage bezüglich des Kolbens 42.

Ferner ist bei einer bevorzugten Variante der erfindungsgemäßen Lösung in dem Kolbenboden 72a außerdem noch ein Ring 76a aus thermisch isolierendem Material eingelegt, der gegenüber der Kolbenstirnfläche 66a in Richtung der Trägerplatte 60a übersteht, um eine Wärmeübertragung von dem Bremsklotz 62a auf den Kolben 42 zu verringern.

Der Kolben 42 weist ferner druckraumseitig eine Bohrung 80 auf, in die eine Einstellschraube 82 hineinragt. Die Einstellschraube 82 durchsetzt dabei die Rückwand 41 des Gehäuses 32 und ist außerdem über ein Gewinde 84 in Richtung der Achse 44 der Bohrung 40 einstellbar in der Rückwand 41 gehalten, wobei die Rückwand 41 die Einstellschraube 82 mittels einer angeformten Zylinderhülse 86 im Bereich eines Zylinderansatzes 88 der Einstellschraube 82 führt und zwischen der Zylinderhülse 86 und dem Zylinderansatz 88 noch eine Dichtung 90 zur Abdichtung des Druckraums 46 nach außen, d. h. gegen ein Austreten von Hydraulikmedium, zwischen der Rückwand 41 und der Einstellschraube 82 vorgesehen ist.

Die Einstellschraube 82 weist ferner einen in der Bohrung 80 liegenden endseitigen Bund 92 auf, an welchem sich eine Druckfeder 94 abstützt, die sich zwischen dem Bund 92 und einem Ring 96 erstreckt, welcher zwischen dem Bund 92 und der Rückwand 41 in der Bohrung 80 liegt und in dieser fest angeordnet ist. Diese Druckfeder 94 drückt den Kolben 42 gegen ein den Bund 92 tragendes Ende 98 der Einstellschraube 82, wenn die erfindungsgemäße Scheibenbremse nicht durch Druckbeaufschlagen des Druckraums 46 betätigt wird.

Zum Einstellen der Einstellschraube 82 ist diese mit einem Innensechskant 100 versehen, welcher auf einer dem Ende 98 gegenüberliegenden Seite der Einstellschraube 82 in der Rückwand 41 angeordnet und von außerhalb des Gehäuses 32 zugänglich ist.

Zum Zweck der Befüllung oder Belüftung des gesamten Bremssystems mit Hydraulikmedium ist die Einstellschraube 82 noch zusätzlich mit einer Entlüftungsbohrung 102 versehen, welche mittels einer Dichtschraube 104 verschließbar ist.

Ein auf einer dem Laufrad 16 zugewandten Innenseite der Bremsscheibe 20 und zwischen dieser und dem Laufrad 16 angeordneter Arm 110 des Bremssattels 30 ist mit einer sich-ausgehend von einer Öffnung 112 in den Arm 110 hineinerstreckenden Ausnehmung 114 versehen, die als Gewindebohrung ausgebildet ist. In der Ausnehmung 114 ist eine Gewindescheibe 116 angeordnet, welche mindestens einen Dauermagneten 118 trägt, welcher auf einer der Bremsscheibe 20 zugewandten Seite sitzt und auf eine Trägerplatte 60b eines zweiten Bremsklotzes 62b wirkt, der ebenfalls noch mit einem Bremsbelag 64b versehen ist. Auch die Trägerplatte 60b des Bremsklotzes 62b ist mit ihrer Außenkontur 66b in dem Arm 110 des Bremssattels 30 gegen Bewegungen quer zur Achse 44 gehalten und weist außerdem noch einen Fortsatz 68b auf, der die Trägerplatte 60b drehfest in dem Arm 110 fixiert.

Der Dauermagnet 118 zieht dabei in gleicher Weise wie der Dauermagnet 74 die Trägerplatte 60b in Richtung der Gewindescheibe 116.

Vorzugsweise ist der zweite Bremsklotz 62b in Form und Aufbau identisch mit dem ersten Bremsklotz 62a.

Durch Verdrehen der Gewindescheibe 116, vorzugsweise über einen Innensechskant 120, ist die Position der Gewindescheibe 116 in Richtung der Achse 44 der Bohrung 40 variierbar und somit auch der Abstand des Bremsbelags 64b von der Bremsscheibe 20, so daß ein zwischen der nicht beaufschlagten Stellung des äußeren Rings 26 der Bremsscheibe 20 und dem Bremsbelag 64b erwünschter Spalt S exakt einstellbar ist.

Vorzugsweise ist der Dauermagnet 118 exzentrisch zur Gewindebohrung 114 angeordnet, so daß ein Reibmoment zwischen der aufgrund des Fortsatzes 68b unverdrehbar in dem Arm 110 des Gehäuses 32 fixierten Trägerplatte 60b und somit auch dem zweiten Bremsklotz 62b und der Gewindescheibe 116 auftritt, welches verhindert, daß die Gewindescheibe 116 sich selbständig in der Gewindebohrung 114 durch Verdrehen verstellen kann.

Ferner wird vorzugsweise vorgeschlagen, daß zwischen der Trägerplatte 60b und dem Dauermagnet 118 noch zusätzlich ein Luftspalt vorgesehen ist, und außerdem die Trägerplatte 60b nur auf einem äußeren Rand 162 der Gewindescheibe 116 aufliegt, wodurch das erwünschte Reibmoment den größtmöglichen Wert erreicht.

Die Gewindebohrung 114 in dem Arm 110 ist vorzugsweise so bemessen, daß entweder bei abgebautem Bremssattel 30 oder entfernter Bremsscheibe 20, wenn also die Bremsscheibe 20 nicht in die schlitzförmige Ausnehmung 34 hineingreift, beide Bremsklötze 62a und 62b durch die Gewindebohrung 114 einführbar sind.

Ferner ist vorzugsweise vorgesehen, daß ein Zwischenraum Z zwischen der Bremsscheibe 20 und Wandflächen 124,126 der Ausnehmung 34 stets kleiner ist als eine Dicke der Trägerplatten 60a und 60b, so daß auch bei abgenützten Bremsbelägen 64a, 64b die Trägerplatten 60a und 60b sich nicht verklemmen oder gar durch die Ausnehmung 34 heraus nach außen gezogen werden können.

Die erfindungsgemäße Scheibenbremse arbeitet folgendermaßen:

Nach dem Anschrauben des Bremssattels 30 an das Rahmenteil 10 werden mittels der Einstallschraube 82 und der Gewindescheibe 116 die Bremsklötze 62a und 62b so eingestellt, daß die Bremsbeläge 64a und 64b möglichst nahe der Bremsscheibe 20 sind, jedoch zwischen diesen und der Bremsscheibe 20 jeweils ein Spalt S besteht und sich somit die Bremsbeläge 64a, 64b und die Bremsscheibe 20 nicht berühren.

Da dadurch die Bremsbeläge 64a und 64b relativ zum Rahmenteil 10 in definierter geometrischer Position positionierbar sind und andererseits auch die Bremsscheibe über die Nabe 14 in Richtung der Drehachse 18 axial unverschieblich relativ zum Rahmenteil 10 definiert positioniert ist, wird sich die Bremsscheibe 20 stets frei zwischen den Bremsbelägen 64a und 64b hindurchbewegen.

Wird nun durch Betätigen der Scheibenbremse, beispielsweise durch Betätigen des zeichnerisch nicht dargestellten Hauptbremszylinders, insbesondere auf manuelle Art und Weise. Flüssigkeit, d. h. ein Hydraulikmedium, über die Leitung 54 in den Druckraum 46 gefördert und dabei der Druck des Hydraulikmediums im Druckraum 46 erhöht, so bewegt sich der Kolben 42 gegen die Wirkung der Druckfeder 94 in Richtung der Bremsscheibe 20 und drückt zunächst den ersten Bremsklotz 62a gegen den äußeren Ring 26 der Bremsscheibe 20. Sodann wird der äußere Ring 26 unter elastischer Verformung der Stege 25 der Bremsscheibe 20, d. h. Verformung der Bremsscheibe 20 zu einer Seite, nämlich zum Bremsklotz 62b, hin, gegen den zweiten Bremsbelag 64b gedrückt. Die Bremsscheibe 20 ist jetzt in ihrer deformierten Stellung mit dem äußeren Ring 26 zwischen den Bremsbelägen 64a und 64b eingespannt, und die Bremskraft kann entsprechend dem Flüssigkeitsdruck im Druckraum 46 erzeugt werden.

Wird der Bremsvorgang durch Wegnahme des Drucks im Druckraum 46 beendet, so zieht die Druckfeder 94 den Kolben 42 mitsamt dem an diesem aufgrund des Dauermagnets 74 haftenden Bremsklotz 62a so weit zurück, bis der Kolben 42 an dem Ende 98 der Einstellschraube 82 anliegt, weiche einen Anschlag für den Kolben 42 darstellt. Damit hat die Bremsscheibe 20 die Möglichkeit, ihre ursprüngliche, undeformierte Form wieder einzunehmen und sich somit wieder unter Ausbildung des Spalts S zwischen den Bremsbelägen 64a und 64b ohne Berührung derselben durch diese hindurch zu bewegen.

Wenn die Bremsbeläge 64a und 64b abgenützt sind, können sie auf einfache Weise mit einem handelsüblichen Werkzeug durch Nachstellen der Einstellschraube 82 und der Gewindescheibe 116 wieder in eine Position gebracht werden, in welcher sie unter Ausbildung des Spalts S relativ zur undeformierten Bremsscheibe 20 stehen.

## Patentansprüche (Patentansprüche für folgende(n) Vertragsstaat(en): AT, BE, CH/LI, FR, NBL)

1. Scheibenbremse für Fahrzeuge, insbesondere Fahrräder, umfassend eine fest mit einer Nabe (14) verbindbare Bremsscheibe (20), einen die Bremsscheibe (20) auf einander gegenüberliegenden Seiten übergreifenden Bremssattel (30), mindestens einen ersten, auf der einen Seite der Bremsscheibe (20) angeordneten und beim Betätigen der Scheibenbremse gegenüber dem Bremssattel (30) in Richtung der Bremsscheibe (20) bewegbaren Bremsbelag (64a) und mindestens einen zweiten, auf der anderen Seite der Bremsscheibe (20) am Bremssattel (30) in Richtung der Bremsscheibe (20) unverschieblich angeordneten Bremsbelag (64b),
**dadurch gekennzeichnet, dass** der Bremssattel (30) in definierter geometrischer Zuordnung zur Nabe (14) feststehend angeordnet ist, dass der Bremssattel (30) bei unbetätigter Scheibenbremse so gegenüber der Bremsscheibe (20) positioniert ist, dass zwischen dem ersten Bremsbelag (64a) und der Bremsscheibe (20) sowie zwischen dem zweiten Bremsbelag (64b) und der Bremsscheibe (20) ein Spalt (S) besteht, dass beim Betätigen der Scheibenbremse der erste Bremsbelag (64a) auf die Bremsscheibe (20) derart einwirkt, dass ein von dem ersten Bremsbelag (64a) beaufschlagter äußerer Ring (26) der Bremsscheibe (20) sich unter elastischer Verformung der Bremsscheibe (20) in Richtung des zweiten Bremsbelags (64b) bewegt und sich an dem zweiten Bremsbelag (64b) anlegt, und dass der zweite Bremsbelag (64b) mittels einer Einstelleinrichtung (114, 116) in einer definierten geometrischen Zuordnung relativ zur Bremsscheibe (20) positionierbar ist.

2. Scheibenbremse nach Anspruch 1, **dadurch gekennzeichnet, dass** der Bremssattel (30) fest mit einem die Nabe (14) tragenden Rahmenteil (10) verbunden ist.

3. Scheibenbremse nach Anspruch 2, **dadurch gekennzeichnet, dass** die Nabe (14) drehbar und axial unverschieblich auf einer rahmenfesten Achse (12) an dem Rahmenteil (10) gelagert ist.

4. Scheibenbremse nach einem der voranstehenden Ansprüche, **dadurch gekennzeichnet, dass** die Scheibenbremse einen ersten und einen zweiten Bremsklotz (62a, 62b) aufweist, welche die ersten bzw. zweiten Bremsbeläge (64a, 64b) tragen.

5. Scheibenbremse nach Anspruch 4, **dadurch gekennzeichnet, dass** die Bremsklötze (62a, 62b) mittels Dauermagneten (74, 118) an den diese abstützenden Teilen (42, 116) in Anlage gehalten sind.

6. Scheibenbremse nach Anspruch 5, **dadurch gekennzeichnet, dass** die Bremsklötze (62a, 62b) Stahlplatten als Trägerplatten (60a, 60b) für die Bremsbeläge (64a, 64b) aufweisen.

7. Scheibenbremse nach Anspruch 5 oder 6, **dadurch gekennzeichnet, dass** mindestens einer der Dauermagnete (118) exzentrisch zu dem diesen tragenden Teil (116) angeordnet ist.

8. Scheibenbremse nach einem der Ansprüche 4 bis 7, **dadurch gekennzeichnet, dass** die die Bremsklötze (62a, 62b) abstützenden Teile (42, 116) gegenüber den Bremsklötzen (62a, 62b) thermisch isoliert sind.

9. Scheibenbremse nach einem der Ansprüche 4 bis 8, **dadurch gekennzeichnet, dass** die beiden Bremsklötze (62a, 62b) durch eine seitlich neben der Bremsscheibe (20) angeordnete Öffnung (112) des Bremssattels (30) hindurch montierbar sind.

10. Scheibenbremse nach einem der voranstehenden Ansprüche, **dadurch gekennzeichnet, dass** der erste Bremsbelag (64a) durch einen im Bremssattel (30) angeordneten hydraulisch betätigbaren Kolben (42) in Richtung der Bremsscheibe (20) bewegbar ist.

11. Scheibenbremse nach Anspruch 10, **dadurch gekennzeichnet, dass** der Kolben (42) mittels einer Feder (94).in Richtung einer unbetätigten Stellung beaufschlagt ist.

12. Scheibenbremse nach Anspruch 10 oder 11, **dadurch gekennzeichnet, dass** der Kolben (42) über ein thermisch isolierendes Element (76a) auf den ersten Bremsbelag (64a) wirkt.

13. Scheibenbremse nach Anspruch 12, **dadurch gekennzeichnet, dass** zwischen dem Kolben (42) und einem den ersten Bremsbelag (64a) umfassenden ersten Bremsklotz (62a) ein Ring (76) aus wärmeisolierendem Material angeordnet ist.

14. Scheibenbremse nach einem der Ansprüche 4 bis 13, **dadurch gekennzeichnet, dass** der Bremsklotz (62a) mittels eines Dauermagneten (74) in Richtung einer Anlage an dem diesen abstützenden Kolben (42) beaufschlagt ist.

15. Scheibenbremse nach einem der voranstehenden Ansprüche, **dadurch gekennzeichnet, dass** der zweite Bremsbelag von einem fest in den Bremssattel (30) einsetzbaren Teil (116) gehalten ist.

16. Scheibenbremse nach Anspruch 15, **dadurch gekennzeichnet, dass** das Teil (116) in eine sich an die Öffnung (112) anschließende Ausnehmung (114) im Bremssattel (30) einsetzbar ist.

17. Scheibenbremse nach Anspruch 16, **dadurch gekennzeichnet, dass** das Teil als in die Ausnehmung (114) einschraubbare Gewindescheibe (116) ausgebildet ist.

18. Scheibenbremse nach Anspruch 17, **dadurch gekennzeichnet, dass** die Gewindescheibe (116) einen äußeren Rand (122) aufweist, an welchem der zweite Bremsklotz (62b) anliegt und welcher den zweiten Bremsklotz (62b) mit einem Luftspalt relativ zu dem den Bremsklotz (62b) haltenden Dauermagneten (118) positioniert.

19. Scheibenbremse nach einem der voranstehenden Ansprüche, **dadurch gekennzeichnet, dass** der erste Bremsbelag (64a) mittels einer Einstelleinrichtung (42, 82) in einer definierten geometrischen Zuordnung relativ zur Bremsscheibe (20) positionierbar ist.

20. Scheibenbremse nach Anspruch 19, **dadurch gekennzeichnet, dass** die Einstelleinrichtung eine als Anschlag für den Kolben (42) dienende und relativ zum Gehäuse (32) verstellbare Einstellschraube (82) umfasst.

21. Scheibenbremse nach Anspruch 20, **dadurch gekennzeichnet, dass** die Einstellschraube (82) mit einer verschließbaren Entlüftungsbohrung (102) versehen ist.

22. Scheibenbremse nach einem der voranstehenden Ansprüche, **dadurch gekennzeichnet, dass** die Einstelleinrichtung ein relativ zum Gehäuse (32) verstellbares Gewindeelement (116) umfasst.

## Patentansprüche (Patentansprüche für folgende(n) Vertragsstaat(en): DE)

1. Scheibenbremse für Fahrzeuge, insbesondere Fahrräder, umfassend eine fest mit einer Nabe (14) verbindbare Bremsscheibe (20), einen die Bremsscheibe (20) auf einander gegenüberliegenden Seiten übergreifenden Bremssattel (30), mindestens einen ersten, auf der einen Seite der Bremsscheibe (20) angeordneten und beim Betätigen der Scheibenbremse gegenüber dem Bremssattel (30) in Richtung der Bremsscheibe (20) bewegbaren Bremsbelag (64a) und mindestens einen zweiten, auf der anderen Seite der Bremsscheibe (20) am Bremssattel (30) in Richtung der Bremsscheibe (20) unverschieblich angeordneten Bremsbelag (64b),
**dadurch gekennzeichnet, dass** der Bremssattel (30) in definierter geometrischer Zuordnung zur Nabe (14) feststehend angeordnet ist, dass der Bremssattel (30) bei unbetätigter Scheibenbremse so gegenüber der Bremsscheibe (20) positioniert ist, dass zwischen dem ersten Bremsbelag (64a) und der Bremsscheibe (20) sowie zwischen dem zweiten Bremsbelag (64b) und der Bremsscheibe (20) ein Spalt (S) besteht, dass beim Betätigen der Scheibenbremse der erste Bremsbelag (64a) auf die Bremsscheibe (20) derart einwirkt, dass ein von dem ersten Bremsbelag (64a) beaufschlagter äußerer Ring (26) der Bremsscheibe (20) sich unter elastischer Verformung der Bremsscheibe (20) in Richtung des zweiten Bremsbelags (64b) bewegt und sich an dem zweiten Bremsbelag (64b) anlegt, dass die Bremsscheibe (20) mittels Schrauben (24) an die Nabe (14) angeschraubt ist und dass der zweite Bremsbelag (64b) mittels einer Einstelleinrichtung (114, 116) in einer definierten geometrischen Zuordnung relativ zur Bremsscheibe (20) positionierbar ist.

2. Scheibenbremse nach Anspruch 1, **dadurch gekennzeichnet, dass** der Bremssattel (30) fest mit einem die Nabe (14) tragenden Rahmenteil (10) verbunden ist.

3. Scheibenbremse nach Anspruch 1 oder 2, **dadurch gekennzeichnet, dass** das Gehäuse (32) an an dem Rahmenteil (10) vorhandene Flansche (36) anschraubbar ist.

4. Scheibenbremse nach Anspruch 2 oder 3, **dadurch gekennzeichnet, dass** die Nabe (14) drehbar und axial unverschieblich auf einer rahmenfesten Achse (12) an dem Rahmenteil (10) gelagert ist.

5. Scheibenbremse nach einem der voranstehenden Ansprüche, **dadurch gekennzeichnet, dass** die Scheibenbremse einen ersten und einen zweiten Bremsklotz (62a, 62b) aufweist, welche die ersten bzw. zweiten Bremsbeläge (64a, 64b) tragen, und dass die Bremsklötze (62a, 62b) auswechselbar sind.

6. Scheibenbremse nach einem der voranstehenden Ansprüche, **dadurch gekennzeichnet, dass** die Scheibenbremse einen ersten und einen zweiten Bremsklotz (62a, 62b) aufweist, welche die ersten bzw. zweiten Bremsbeläge (64a, 64b) tragen, und dass jeder Bremsklotz (62a, 62b) in einem Gehäuse (32) des Bremssattels (30) verdrehsicher gehalten ist.

7. Scheibenbremse nach einem der voranstehenden Ansprüche, **dadurch gekennzeichnet, dass** die Scheibenbremse einen ersten und einen zweiten Bremsklotz (62a, 62b) aufweist und dass die Bremsklötze (62a, 62b) mittels Dauermagneten (74, 118) an den diese abstützenden Teilen (42, 116) in Anlage gehalten sind

8. Scheibenbremse nach Anspruch 7, **dadurch gekennzeichnet, dass** die Bremsklötze (62a, 62b) Stahlplatten als Trägerplatten (60a, 60b) für die Bremsbeläge (64a, 64b) aufweisen.

9. Scheibenbremse nach Anspruch 7 oder 8, **dadurch gekennzeichnet, dass** mindestens einer der Dauermagnete (118) exzentrisch zu dem diesen tragenden Teil (116) angeordnet ist.

10. Scheibenbremse nach einem der Ansprüche 5 bis 9, **dadurch gekennzeichnet, dass** die die Bremsklötze (62a, 62b) abstützenden Teile (42, 116) gegenüber den Bremsklötzen (62a, 62b) thermisch isoliert sind.

11. Scheibenbremse nach einem der Ansprüche 5 bis 10, **dadurch gekennzeichnet, dass** die beiden Bremsklötze (62a, 62b) durch eine seitlich neben der Bremsscheibe (20) angeordnete Öffnung (112) des Bremssattels (30) hindurch montierbar sind.

12. Scheibenbremse nach einem der voranstehenden Ansprüche, **dadurch gekennzeichnet, dass** der erste Bremsbelag (64a) durch einen im Bremssattel (30) angeordneten hydraulisch betätigbaren Kolben (42) in Richtung der Bremsscheibe (20) bewegbar ist.

13. Scheibenbremse nach Anspruch 12, **dadurch gekennzeichnet, dass** der Kolben (42) mittels einer Feder (94) in Richtung einer unbetätigten Stellung beaufschlagt ist.

14. Scheibenbremse nach Anspruch 12 oder 13, **dadurch gekennzeichnet, dass** der Kolben (42) über ein thermisch isolierendes Element (76a) auf den ersten Bremsbelag (64a) wirkt.

15. Scheibenbremse nach Anspruch 14, **dadurch gekennzeichnet, dass** zwischen dem Kolben (42) und einem den ersten Bremsbelag (64a) umfassenden ersten Bremsklotz (62a) ein Ring (76) aus wärmeisolierendem Material angeordnet ist.

16. Scheibenbremse nach einem der Ansprüche 5 bis 15, **dadurch gekennzeichnet, dass** der Bremsklotz (62a) mittels eines Dauermagneten (74) in Richtung einer Anlage an dem diesen abstützenden Kolben (42) beaufschlagt ist.

17. Scheibenbremse nach einem der voranstehenden Ansprüche, **dadurch gekennzeichnet, dass** der zweite Bremsbelag von einem fest in den Bremssattel (30) einsetzbaren Teil (116) gehalten ist.

18. Scheibenbremse nach Anspruch 17, **dadurch gekennzeichnet, dass** das Teil (116) in eine sich an die Öffnung (112) anschließende Ausnehmung (114) im Bremssattel (30) einsetzbar ist.

19. Scheibenbremse nach Anspruch 18, **dadurch gekennzeichnet, dass** das Teil als in die Ausnehmung (114) einschraubbare Gewindescheibe (116) ausgebildet ist.

20. Scheibenbremse nach Anspruch 19, **dadurch gekennzeichnet, dass** die Gewindescheibe (116) einen äußeren Rand (122) aufweist, an welchem der zweite Bremsklotz (62b) anliegt und welcher den zweiten Bremsklotz (62b) mit einem Luftspalt relativ zu dem den Bremsklotz (62b) haltenden Dauermagneten (118) positioniert.

21. Scheibenbremse nach einem der voranstehenden Ansprüche, **dadurch gekennzeichnet, dass** der erste Bremsbelag (64a) mittels einer Einstelleinrichtung (42, 82) in einer definierten geometrischen Zuordnung relativ zur Bremsscheibe (20) positionierbar ist.

22. Scheibenbremse nach Anspruch 21, **dadurch gekennzeichnet, dass** die Einstelleinrichtung eine als Anschlag für den Kolben (42) dienende und relativ zum Gehäuse (32) verstellbare Einstellschraube (82) umfasst.

23. Scheibenbremse nach Anspruch 22, **dadurch gekennzeichnet, dass** die Einstellschraube (82) mit einer verschließbaren Entlüftungsbohrung (102) versehen ist.

24. Scheibenbremse nach einem der voranstehenden Ansprüche, **dadurch gekennzeichnet, dass** die Einstelleinrichtung ein relativ zum Gehäuse (32) verstellbares Gewindeelement (116) umfasst.

## Claims (Claims for the following Contracting State(s): AT, BE, CH/LI, FR, NL)

1. Disk brake for vehicles, in particular, bicycles, comprising a brake disk (20) securely connectable to a hub (14), a brake calliper (30) engaging over the brake disk (20) on oppositely located sides, at least one first brake lining (64a) arranged on one side of the brake disk (20) and movable in the direction of the brake disk (20) in relation to the brake calliper (30) during actuation of the disk brake, and at least one second brake lining (64b) arranged on the other side of the brake disk (20) on the brake calliper (30) so as to be non-displaceable in the direction of the brake disk (20), **characterized in that** the brake calliper (30) is arranged so as to be fixed in defined geometrical correlation to the hub (14), that when the disk brake is not actuated, the brake calliper (30) is positioned in relation to the brake disk (20) such that a gap (S) exists between the first brake lining (64a) and the brake disk (20) as well as between the second brake lining (64b) and the brake disk (20), that upon actuating the disk brake, the first brake lining (64a) acts on the brake disk (20) in such a way that an outer ring (26) of the brake disk (20) acted upon by the first brake lining (64a) moves in the direction of the second brake lining (64b) with the brake disk (20) thereby undergoing elastic deformation and abuts on the second brake lining (64b), that the brake disk (20) is screwed to the hub (14) by means of screws (24), and that the second brake lining (64b) is positionable in defined geometrical correlation relative to the brake disk (20) by means of an adjusting device (114, 116).

2. Disk brake as defined in claim 1, **characterized in that** the brake calliper (30) is securely connected to a frame member (10) bearing the hub (14).

3. Disk brake as defined in claim 1 or 2, **characterized in that** the housing (32) is screwable to flanges (36) provided on the frame member (10).

4. Disk brake as defined in claim 2 or 3, **characterized in that** the hub (14) is mounted on the frame member (10) so as to be rotatable and axially non-displaceable on an axle (12) stationary with respect to the frame.

5. Disk brake as defined in any one of the preceding claims, **characterized in that** the disk brake has a first and a second brake pad (62a, 62b) bearing the first and the second brake lining (64a, 64b), respectively, and that the brake pads (62a, 62b) are exchangeable.

6. Disk brake as defined in any one of the preceding claims, **characterized in that** the disk brake has a first and a second brake pad (62a, 62b) bearing the first and the second brake lining (64a, 64b), respectively, and that each brake pad (62a, 62b) is held so as to be secured against turning in a housing (32) of the brake calliper (30).

7. Disk brake as defined in any one of the preceding claims, **characterized in that** the disk brake has a first and a second brake pad (62a, 62b), and that the brake pads (62a, 62b) are held in abutment on the members (42, 116) supporting these by means of permanent magnets (74, 118).

8. Disk brake as defined in claim 7, **characterized in that** the brake pads (62a, 62b) have steel plates as carrier plates (60a, 60b) for the brake linings (64a, 64b).

9. Disk brake as defined in claim 7 or 8, **characterized in that** at least one of the permanent magnets (118) is arranged eccentrically to the member (116) supporting it.

10. Disk brake as defined in any one of claims 5 to 9, **characterized in that** the members (42, 116) supporting the brake pads (62a, 62b) are thermally insulated in relation to the brake pads (62a, 62b).

11. Disk brake as defined in any one of claims 5 to 10, **characterized in that** the two brake pads (62a, 62b) are adapted to be assembled through an opening (112) of the brake calliper (30) arranged laterally next to the brake disk (20).

12. Disk brake as defined in any one of the preceding claims, **characterized in that** the first brake lining (64a) is movable in the direction of the brake disk (20) by means of a hydraulically actuatable piston (42) arranged in the brake calliper (30).

13. Disk brake as defined in claim 12, **characterized in that** the piston (42) is acted upon in the direction of a non-actuated position by means of a spring (94).

14. Disk brake as defined in claim 12 or 13, **characterized in that** the piston (42) acts on the first brake lining (64a) via a thermally insulating element (76a).

15. Disk brake as defined in claim 14, **characterized in that** a ring (76) consisting of heat-insulating material is arranged between the piston (42) and a first brake pad (62a) surrounding the first brake lining (64a).

16. Disk brake as defined in any one of claims 5 to 15, **characterized in that** the brake pad (62a) is acted upon in the direction of abutment on the piston (42) supporting it by means of a permanent magnet (74).

17. Disk brake as defined in any one of the preceding claims, **characterized in that** the second brake lining is held by a member (116) securely insertable into the brake calliper (30).

18. Disk brake as defined in claim 17, **characterized in that** the member (116) is insertable into a recess (114) in the brake calliper (30) adjoining the opening (112).

19. Disk brake as defined in claim 18, **characterized in that** the member is designed as a threaded disk (116) which is screwable into the recess (114).

20. Disk brake as defined in claim 19, **characterized in that** the threaded disk (116) has an outer edge (122) on which the second brake pad (62b) abuts, and the outer edge (122) positions the second brake pad (62b) relative to the permanent magnet (118) holding the brake pad (62b) with a gap of air.

21. Disk brake as defined in any one of the preceding claims, **characterized in that** the first brake lining (64a) is positionable in defined geometrical correlation relative to the brake disk (20) by means of an adjusting device (42, 82).

22. Disk brake as defined in claim 21, **characterized in that** the adjusting device comprises an adjusting screw (82) serving as a stop for the piston (42) and being adjustable relative to the housing (32).

23. Disk brake as defined in claim 22, **characterized in that** the adjusting screw (82) is provided with a closable venting bore (102).

24. Disk brake as defined in any one of the preceding claims, **characterized in that** the adjusting device comprises a threaded element (116) adjustable relative to the housing (32).

## Claims (Claims for the following Contracting State(s): DE)

1. Disk brake for vehicles, in particular, bicycles, comprising a brake disk (20) securely connectable to a hub (14), a brake calliper (30) engaging over the brake disk (20) on oppositely located sides, at least one first brake lining (64a) arranged on one side of the brake disk (20) and movable in the direction of the brake disk (20) in relation to the brake calliper (30) during actuation of the disk brake, and at least one second brake lining (64b) arranged on the other side of the brake disk (20) on the brake calliper (30) so as to be non-displaceable in the direction of the brake disk (20), **characterized in that** the brake calliper (30) is arranged so as to be fixed in defined geometrical correlation to the hub (14), that when the disk brake is not actuated, the brake calliper (30) is positioned in relation to the brake disk (20) such that a gap (S) exists between the first brake lining (64a) and the brake disk (20) as well as between the second brake lining (64b) and the brake disk (20), that upon actuating the disk brake, the first brake lining (64a) acts on the brake disk (20) in such a way that an outer ring (26) of the brake disk (20) acted upon by the first brake lining (64a) moves in the direction of the second brake lining (64b) with the brake disk (20) thereby undergoing elastic deformation and abuts on the second brake lining (64b), and that the second brake lining (64b) is positionable in defined geometrical correlation relative to the brake disk (20) by means of an adjusting device (114, 116).

2. Disk brake as defined in claim 1, **characterized in that** the brake calliper (30) is securely connected to a frame member (10) bearing the hub (14).

3. Disk brake as defined in claim 2, **characterized in that** the hub (14) is mounted on the frame member (10) so as to be rotatable and axially non-displaceable on an axle (12) stationary with respect to the frame.

4. Disk brake as defined in any one of the preceding claims, **characterized in that** the disk brake has a first and a second brake pad (62a, 62b) bearing the first and the second brake lining (64a, 64b), respectively.

5. Disk brake as defined in claim 4, **characterized in that** the brake pads (62a, 62b) are held in abutment on the members (42, 116) supporting these by means of permanent magnets (74, 118).

6. Disk brake as defined in claim 5, **characterized in that** the brake pads (62a, 62b) have steel plates as carrier plates (60a, 60b) for the brake linings (64a, 64b).

7. Disk brake as defined in claim 5 or 6, **characterized in that** at least one of the permanent magnets (118) is arranged eccentrically to the member (116) supporting it.

8. Disk brake as defined in any one of claims 4 to 7, **characterized in that** the members (42, 116) supporting the brake pads (62a, 62b) are thermally insulated in relation to the brake pads (62a, 62b).

9. Disk brake as defined in any one of claims 4 to 8, **characterized in that** the two brake pads (62a, 62b) are adapted to be assembled through an opening (112) of the brake calliper (30) arranged laterally next to the brake disk (20).

10. Disk brake as defined in any one of the preceding claims, **characterized in that** the first brake lining (64a) is movable in the direction of the brake disk (20) by means of a hydraulically actuatable piston (42) arranged in the brake calliper (30).

11. Disk brake as defined in claim 10, **characterized in that** the piston (42) is acted upon in the direction of a non-actuated position by means of a spring (94).

12. Disk brake as defined in claim 10 or 11, **characterized in that** the piston (42) acts on the first brake lining (64a) via a thermally insulating element (76a).

13. Disk brake as defined in claim 12, **characterized in that** a ring (76) consisting of heat-insulating material is arranged between the piston (42) and a first brake pad (62a) surrounding the first brake lining (64a).

14. Disk brake as defined in any one of claims 4 to 13, **characterized in that** the brake pad (62a) is acted upon in the direction of abutment on the piston (42) supporting it by means of a permanent magnet (74).

15. Disk brake as defined in any one of the preceding claims, **characterized in that** the second brake lining is held by a member (116) securely insertable into the brake calliper (30).

16. Disk brake as defined in claim 15, **characterized in that** the member (116) is insertable into a recess (114) in the brake calliper (30) adjoining the opening (112).

17. Disk brake as defined in claim 16, **characterized in that** the member is designed as a threaded disk (116) which is screwable into the recess (114).

18. Disk brake as defined in claim 17, **characterized in that** the threaded disk (116) has an outer edge (122) on which the second brake pad (62b) abuts, and the outer edge (122) positions the second brake pad (62b) relative to the permanent magnet (118) holding the brake pad (62b) with a gap of air.

19. Disk brake as defined in any one of the preceding claims, **characterized in that** the first brake lining (64a) is positionable in defined geometrical correlation relative to the brake disk (20) by means of an adjusting device (42, 82).

20. Disk brake as defined in claim 19, **characterized in that** the adjusting device comprises an adjusting screw (82) serving as a stop for the piston (42) and being adjustable relative to the housing (32).

21. Disk brake as defined in claim 20, **characterized in that** the adjusting screw (82) is provided with a closable venting bore (102).

22. Disk brake as defined in any one of the preceding claims, **characterized in that** the adjusting device comprises a threaded element (116) adjustable relative to the housing (32).

## Revendications (Revendications pour l'(les) Etat(s) contractant(s) suivant(s): AT, BE, CH/LI, FR, NL)

1. Frein à disque pour véhicules, en particulier pour bicyclettes, comprenant un disque de frein (20) solidement raccordable à un moyeu (14), un étrier (30) s'étendant sur le disque de frein (20) sur les côtés opposés les uns aux autres, au moins une première garniture de frein (64a) disposée sur un côté du disque de frein (20) et pouvant être déplacée en direction du disque de frein (20) relative à l'étrier (30), lors de l'actionnement du frein à disque et au moins une deuxième garniture de frein (64b) disposée sur l'autre côté du disque de frein (20) sur l'étrier (30) sans pouvoir déplacer en direction du disque de frein (20),
**caractérisé en ce que** l'étrier (30) est fixé au moyeu (14) selon une disposition géométrique définie, **en ce que** lorsque le frein à disque est inactif, l'étrier (30) est positionné en face du disque de frein (20) de telle sorte qu'entre la première garniture de frein (64a) et le disque de frein (20) ainsi qu'entre la deuxième garniture de frein (64b) et le disque de frein (20) il y ait un intervalle (S), **en ce que** lorsque le frein à disque est actionné, la première garniture de frein (64a) agit sur le disque de frein (20) de telle manière qu'une bague extérieure (26) du disque de frein (20) chargée par la première garniture de frein (64a) se déplace en direction de la deuxième garniture de frein (64b) lors d'une déformation élastique du disque de frein (20) et se place sur la deuxième garniture de frein (64b) et **en ce que** le disque de frein (20) est vissé au moyeu (14) par des vis (24), et **en ce que** la deuxième garniture de frein (64b) peut être positionnée au moyen d'un dispositif d'ajustage (114, 116) dans une disposition géométrique définie par rapport au disque de frein (20).

2. Frein à disque selon la revendication 1, **caractérisé en ce que** l'étrier (30) est solidement fixé à un élément de structure (10) supportant le moyeu (14).

3. Frein à disque selon la revendication 1 ou 2, **caractérisé en ce que** le boîtier (32) se visse aux brides (36) existant sur l'élément de structure (10).

4. Frein à disque selon la revendication 2 ou 3, **caractérisé en ce que** le moyeu (14) est monté par rapport à l'élément de structure (10) sur palier de manière rotatif mais sans pouvoir déplacer axialement sur un axe fixé à la structure (12).

5. Frein à disque selon l'une des revendications précédentes, **caractérisé en ce que** le frein à disque comporte une première et une deuxième plaquette de frein (62a, 62b) lesquelles supportent les premières ou les deuxièmes garnitures de freins (64a, 64b) et que les plaquettes de freins (62a, 62b) sont démontables.

6. Frein à disque selon l'une des revendications précédentes, **caractérisé en ce que** le frein à disque comporte une première et une deuxième plaquette de frein (62a, 62b) lesquelles supportent les premières ou les deuxièmes garnitures de freins (64a, 64b) et que chaque plaquette de frein (62a, 62b) est maintenue dans un boîtier (32) de l'étrier (30) à l'abri des torsions.

7. Frein à disque selon l'une des revendications précédentes, **caractérisé en ce que** le frein à disque comporte une première et une deuxième plaquette de frein (62a, 62b) et que les plaquettes de freins (62a, 62b) sont installées au moyen d'aimants permanents (74, 118) sur les éléments (42, 116) supportant celles-ci

8. Frein à disque selon la revendication 7, **caractérisé en ce que** les plaquettes de frein (62a, 62b) comportent des plaques d'acier comme plaques de support (60a, 60b) des garnitures de freins (64a, 64b).

9. Frein à disque selon la revendication 7 ou 8, **caractérisé en ce qu'**au moins un des aimants permanents (118) est disposé de manière excentrique par rapport à cet élément (116) de support.

10. Frein à disque selon l'une des revendications 5 à 9, **caractérisé en ce que** les éléments (42, 116) supportant les plaquettes de freins (62a, 62b) sont calorifugés par rapport aux plaquettes de freins (62a, 62b).

11. Frein à disque selon l'une des revendications 5 à 10, **caractérisé en ce que** les deux plaquettes de freins (62a, 62b) peuvent être montées à travers une ouverture (112) de l'étrier (30) située latéralement à côté du disque de frein (20).

12. Frein à disque selon l'une des revendications précédentes, **caractérisé en ce que** la première garniture de frein (64a) est mobile en direction du disque de frein (20) au moyen d'un piston hydraulique (42) installé dans l'étrier (30).

13. Frein à disque selon la revendication 12, **caractérisé en ce que** le piston (42) est monté au moyen d'un ressort (94) en direction d'une position inactive.

14. Frein à disque selon la revendication 12 ou 13, **caractérisé en ce que** le piston (42) agit sur la première garniture de freins (64a) par l'intermédiaire d'un élément de calorifugeage (76a).

15. Frein à disque selon la revendication 14, **caractérisé en ce qu'**une bague (76) en matériau calorifuge est placée entre le piston (42) et une première plaquette de freins (62a) comprenant la première garniture de frein (64a).

16. Frein à disque selon l'une des revendications 5 à 15, **caractérisé en ce que** la plaquette de frein (62a) est montée au moyen d'un aimant permanent (74) en direction d'une installation vers le piston soutenant celui-ci (42).

17. Frein à disque selon l'une des revendications précédentes **caractérisé en ce que** la deuxième garniture de frein est maintenue par un élément (116) à insérer solidement dans l'étrier (30).

18. Frein à disque selon la revendication 17, **caractérisé en ce que** l'élément (116) peut s'insérer dans l'étrier (30) dans une entaille (114) raccordée à l'ouverture (112).

19. Frein à disque selon la revendication 18, **caractérisé en ce que** l'élément est configuré comme un disque fileté à visser (116) dans l'entaille (114).

20. Frein à disque selon la revendication 19, **caractérisé en ce que** le disque fileté (116) comporte une bordure extérieure (122) sur laquelle se trouve la deuxième plaquette de frein (62b) et qui positionne la deuxième plaquette de frein (62b) avec un entrefer par rapport à l'aimant permanent (118) supportant la plaquette de frein (62b).

21. Frein à disque selon l'une des revendications précédentes, **caractérisé en ce que** la première garniture de frein (64a) peut être positionnée par un dispositif d'ajustage (42, 82) dans une disposition géométrique définie par rapport au disque de frein (20).

22. Frein à disque selon la revendication 21, **caractérisé en ce que** le dispositif d'ajustage comprend une vis d'ajustage (82) servant de butée au piston (42) et réglable par rapport au boîtier (32).

23. Frein à disque selon la revendication 22, **caractérisé en ce que** la vis d'ajustage (82) est munie d'un orifice d'aération qui peut être fermé (102).

24. Frein à disque selon l'une quelconque des revendications précédentes, **caractérisé en ce que** le dispositif d'ajustage comprend un élément fileté (116) réglable par rapport au boîtier (32).

## Revendications (Revendications pour l'(les) Etat(s) contractant(s) suivant(s): DE)

1. Frein à disque pour véhicules, en particulier pour bicyclettes, comprenant un disque de frein (20) solidement raccordable à un moyeu (14), un étrier (30) s'étendant sur le disque de frein (20) sur les côtés opposés les uns aux autres, au moins une première garniture de frein (64a) disposée sur un côté du disque de frein (20) et pouvant être déplacée en direction du disque de frein (20) relatif à l'étrier (30), lors de l'actionnement du frein à disque et au moins une deuxième garniture de frein (64b) disposée sur l'autre côté du disque de frein (20) sur l'étrier (30) sans pouvoir déplacer en direction du disque de frein (20),
**caractérisé en ce que** l'étrier (30) est fixé au moyeu (14) selon une disposition géométrique définie, que lorsque le frein à disque est inactif l'étrier (30) est positionné en face du disque de frein (20) de telle sorte qu'entre la première garniture de frein (64a) et le disque de frein (20) ainsi qu'entre la deuxième garniture de frein (64b) et le disque de frein (20) il y ait un intervalle (S), que lorsque le frein à disque est actionné la première garniture de frein (64a) agit sur le disque de frein (20) de telle manière qu'une bague extérieure (26) du disque de frein (20) chargée par la première garniture de frein (64a) se déplace en direction de la deuxième garniture de frein (64b) lors d'une déformation élastique du disque de frein (20) et se place sur la deuxième garniture de frein (64b), et **en ce que** la deuxième garniture de frein (64b) peut être positionnée au moyen d'un dispositif d'ajustage (114, 116) dans une disposition géométrique définie par rapport au disque de frein (20).

2. Frein à disque selon la revendication 1, **caractérisé en ce que** l'étrier (30) est solidement fixé à un élément de structure (10) supportant le moyeu (14).

3. Frein à disque selon la revendication 2, **caractérisé en ce que** le moyeu (14) est monté sur palier de manière orientable et axialement par rapport à l'élément de structure (10) mais sans pouvoir coulisser sur un axe fixé à la structure (12).

4. Frein à disque selon l'une des revendications précédentes, **caractérisé en ce que** le frein à disque comporte une première et une deuxième plaquette de frein (62a, 62b) lesquelles supportent les premières et/ou les deuxièmes garnitures de freins (64a et 64b).

5. Frein à disque selon la revendication 4, **caractérisé en ce que** les plaquettes de freins (62a, 62b) sont installées au moyen d'aimants permanents (74, 118) sur les éléments (42, 116) supportant celles-ci.

6. Frein à disque selon la revendication 5, **caractérisé en ce que** les plaquettes de frein (62a, 62b) comportent des plaques d'acier comme plaques de support (60a, 60b) des garnitures de freins (64a, 64b).

7. Frein à disque selon la revendication 5 ou 6, **caractérisé en ce qu'**au moins un des aimants permanents (118) est disposé de manière excentrique par rapport à cet élément (116) de support.

8. Frein à disque selon l'une des revendications 4 à 7, **caractérisé en ce que** les éléments (42, 116) supportant les plaquettes de freins (62a, 62b) sont calorifugés par rapport aux plaquettes de freins (62a, 62b).

9. Frein à disque selon l'une des revendications 4 à 8, **caractérisé en ce que** les deux plaquettes de freins (62a, 62b) peuvent être montées à travers une ouverture (112) de l'étrier (30) située latéralement à côté du disque de frein (20).

10. Frein à disque selon l'une des revendications précédentes, **caractérisé en ce que** la première garniture de frein (64a) est mobile en direction du disque de frein (20) au moyen d'un piston hydraulique (42) installé dans l'étrier (30).

11. Frein à disque selon la revendication 10, **caractérisé en ce que** le piston (42) est monté au moyen d'un ressort (94) en direction d'une position inactive.

12. Frein à disque selon la revendication 10 ou 11, **caractérisé en ce que** le piston (42) agit sur la première garniture de freins (64a) par l'intermédiaire d'un élément de calorifugeage (76a).

13. Frein à disque selon la revendication 12, **caractérisé en ce qu'**une bague (76a) en matériau calorifuge est placée entre le piston (42) et une première plaquette de freins (62a) comprenant la première garniture de frein (64a).

14. Frein à disque selon l'une des revendications 4 à 13, **caractérisé en ce que** la plaquette de frein (62a) est montée au moyen d'un aimant permanent (74) en direction d'une installation vers le piston soutenant celui-ci (42).

15. Frein à disque selon l'une des revendications précédentes, **caractérisé en ce que** la deuxième garniture de frein est maintenue par un élément (116) à insérer solidement dans l'étrier (30).

16. Frein à disque selon la revendication 15, **caractérisé en ce que** l'élément (116) peut s'insérer dans l'étrier (30) dans une entaille (114) raccordée à l'ouverture (112).

17. Frein à disque selon la revendication 16, **caractérisé en ce que** l'élément est configuré comme un disque fileté à visser (116) dans l'entaille (114).

18. Frein à disque selon la revendication 17, **caractérisé en ce que** le disque fileté (116) comporte une bordure extérieure (122) sur laquelle se trouve la deuxième plaquette de frein (62b) et qui positionne la deuxième plaquette de frein (62b) avec un entrefer par rapport à l'aimant permanent (118) supportant la plaquette de frein (62b).

19. Frein à disque selon l'une des revendications précédentes, **caractérisé en ce que** la première garniture de frein (64a) peut être positionnée par un dispositif d'ajustage (42, 82) dans une disposition géométrique définie par rapport au disque de frein (20).

20. Frein à disque selon la revendication 19, **caractérisé en ce que** le dispositif d'ajustage comprend une vis d'ajustage (82) servant de butée au piston (42) et réglable par rapport au boîtier (32).

21. Frein à disque selon la revendication 20, **caractérisé en ce que** la vis d'ajustage (82) est munie d'un orifice d'aération refermable (102).

22. Frein à disque selon l'une quelconque des revendications précédentes, **caractérisé en ce que** le dispositif d'ajustage comprend un élément fileté (116) réglable par rapport au boîtier (32).
